# EUROPÄISCHE PATENTANMELDUNG

(11) **EP 2 228 860 A1**
(43) Veröffentlichungstag der Anmeldung: **15.09.2010**
(21) Anmeldenummer: 10001489.3
(22) Anmeldetag: 13.02.2010
(51) Int. Cl.: H01M 8/04, H01M 8/10

(54) **Betriebsmittel verbrauchende Systeme mit Aufnahme einer austauschbaren Tankpatrone sowie Verfahren zur unterbrechungsfreien Versorgung dieser Systeme**

(30) Priorität: 06.03.2009 DE 102009012002
(71) Anmelder: Forschungszentrum Jülich GmbH, 52425 Jülich (DE)
(72) Erfinder: Hehemann, Michael, 52428 Jülich (DE); Reichel, Rolf, 41849 Wassenberg (DE)

(57) **Zusammenfassung**

Die Erfindung betrifft ein Betriebsmittel verbrauchendes System, welches über einen im System angeordneten Pufferbehälter mit einem Betriebsmittel versorgt wird. Dieser Pufferbehälter verfügt über eine geeignete Entlüftungseinrichtung, z. B. ein Ventil. Ferner umfasst das System eine Vorrichtung zur Aufnahme einer Tankpatrone für ein flüssiges Betriebsmittel. Zwischen der Tankpatrone und dem Pufferbehälter ist eine Zuführungsleitung vorgesehen.

Das Verfahren zum Versorgen eines Systems mit einem flüssigen Betriebsmittel mit Hilfe einer austauschbaren Tankpatrone, ist **dadurch gekennzeichnet, dass** die austauschbare Tankpatrone über eine Zuführungsleitung an den im System angeordneten Pufferbehälter angeschlossen wird. Das System entnimmt während des Betriebs das Betriebsmittel aus dem Pufferbehälter und die daran angeschlossene Tankpatrone. Nach einer vollständigen Entleerung der angeschlossenen Tankpatrone steht vorteilhaft eine Betriebsmittelreserve über den Pufferbehälter zur Verfügung. Nach einem Wechsel der Tankpatrone wird der Pufferbehälter gefüllt, wobei eine geeignete Entlüftung am Pufferbehälter verhindert, dass Luft in das angeschlossene System eindringt.

## Beschreibung

Die Erfindung betrifft Systeme, beispielsweise Brennstoffzellensysteme, welche mit einem flüssigen Betriebsmittel wie Methanol, in austauschbaren Tankpatronen betrieben werden. Ferner betrifft die Erfindung ein Verfahren zum Betreiben eines solchen Systems, bei welchem das flüssige Betriebsmittel über austauschbare Tankpatronen oder Tanks zur Verfügung gestellt wird und gleichzeitig verhindert werden soll, dass das System während eines Patronenwechsels auf Grund von Unterversorgung durch das Betriebsmittel beschädigt wird.

### Stand der Technik

Niedertemperatur-Brennstoffzellen, insbesondere Direkt-Methanol-Brennstoffzellen, werden mit einem flüssigen Betriebsmittel betrieben. Wenn eine Unterversorgung der Brennstoffzelle auftritt, ohne dass zeitnah eine Abschaltung des Systems erfolgt, kommt es regelmäßig zu erheblichen Schäden an der Brennstoffzelle. Dies liegt in den in der Brennstoffzelle ablaufenden elektrochemischen Reaktionen begründet. An der Anode einer Brennstoffzelle wird der Brennstoff, beispielsweise flüssiges Methanol oder eine Methanol-Wassermischung, oxidiert. Als Folge einer Unterversorgung mit dem Brennstoff treten an der Anode alternativ andere Oxidationsreaktionen auf. Davon betroffen können insbesondere das anodische Katalysatormaterial oder aber auch die Interkonnektoren sein. Gegebenenfalls kann auch eine Elektrolyse des Wassers auftreten. In den meisten Fällen führt dies zu irreparablen Schäden an der Brennstoffzelle oder zu Schäden, die in der Regel nur unter hohem Kostenaufwand repariert werden können.

Eine Unterversorgung mit einem Betriebsmittel kann dabei unterschiedliche Gründe haben, beispielsweise Leckagen in den Leitungen, fehlerhafte Sensoren, geschädigte Pumpen etc..

Bei der Versorgung einer Brennstoffzelle, die über austauschbare Patronen oder Tanks gespeist wird, ist auch im Normalfall immer der Punkt gegeben, wo der Vorrat für das Betriebsmittel zur Neige geht, und eine Ersatzpatrone oder -tank angeschlossen werden muss. In dieser Übergangszeit ist das Risiko einer Unterversorgung regelmäßig besonders hoch, da schon eine sehr kurze Zeitspanne von Sekunden ausreichen kann, um Schäden an der Brennstoffzelle zu verursachen.

Zwar können solche austauschbaren Patronen schon mit einer Füllstandsanzeige ausgestattet sein, aber einerseits erhöht dies die Kosten und andererseits ist der Benutzer, der bestrebt ist, die Patronen möglichst effektiv, d. h. im Idealfall bis zur vollständigen Entleerung zu nutzen, darauf angewiesen, den exakten Zeitpunkt für den Austausch im Auge zu behalten. Dies ist aber regelmäßig für einen Benutzer nicht zumutbar.

Auch für andere Systeme, die mit Betriebsmittel aus austauschbaren Tankpatronen versorgt werden, kann die Erfindung angewendet werden. Dies könnten neben der Brennstoffversorgung u. a. die Versorgung mit aggressiven Schmier- oder Lösemitteln, die Bereitstellung hygienisch abgeschirmter Flüssigkeiten oder die Dosierung von Lebensmittelzusätzen sein.

Aus WO 2004/100300 A1 ist bereits eine Vorrichtung und ein Verfahren zur Erkennung von Kraftstoffmangel bei der Versorgung einer Brennstoffzelle bekannt, bei dem im Fall einer zu geringen Brennstoffversorgung oder des Unterschreitens eines Grenzwertes im Brennstoffvorrat durch einen entsprechenden Sensor ein Signal ausgegeben wird. Daraufhin kann das System in einen sicheren Betriebszustand gebracht werden und der Brennstoffvorratsbehälter, beispielsweise ein auffüllbarer Tank oder eine austauschbare Patrone, wieder aufgefüllt werden. Der Sensor befindet sich entweder in der Kraftstoffzufuhrleitung oder direkt am Tank.

Aus EP 1 933 409 A1 ist ein Brennstoffzellensystem mit einer Vorrichtung zum Wiederbefüllen eines Tanksystems bekannt, welches fest in das Brennstoffzellensystem eingebaut ist. Die Wiederbefüllung erfolgt dabei durch luftdichtes Aufsetzen einer flexibel ausgestalteten gefüllten Patrone an den zur Aufnahme des Betriebsmittels vorgesehenen Tank und durch manuellen Druck auf die Patrone, so dass das Betriebsmittel in den Tank entleert werden kann.

Bislang ist es bei den bekannten Systemen mit Austauschpatronen üblich, dass für eine unterbrechungsfreie Versorgung für den Patronenwechsel genau der Moment der vollständigen Entleerung der Tankpatrone abgepasst wird, bevor der Wechsel stattfindet. Alternativ könnte der Patronenwechsel zwar auch zu einem beliebigen Zeitpunkt davor stattfinden, dann würde aber nachteilig in Kauf genommen werden müssen, dass eine vollständige Entleerung nicht stattfindet und Patronen mit Resten von gefährlichen Stoffen entsorgt werden müssen. Die bekannte Art des Wechselns einer Tankpatrone erfordert also entweder einen genau einzuhaltenden Zeitplan für den Wechsel oder erzeugt alternativ höhere Kosten auf Grund nicht vollständig entleerter Tankpatronen.

### Aufgabe und Lösung

Der Erfindung liegt die Aufgabe zugrunde, Systeme vor Schäden zu schützen, die durch Unterversorgung mit einem Betriebsmittel hervorgerufen werden können. Darüber hinaus ist es die Aufgabe der Erfindung, ein System bereitzustellen, bei dem auf einfache Weise und ohne die Gefahr einer Unterversorgung ein Austausch von Betriebsmitteltankpatronen ohne Unterbrechung der Betriebsweise erfolgen kann, und ohne dass ein so exakter Zeitplan für das Auswechseln der Patronen eingehalten werden muss, wie es bislang erforderlich ist.

Ferner ist es die Aufgabe der Erfindung, entsprechend angepasste Tankpatronen bereitzustellen und eine Kontrolle der kompletten Restentleerung dieser Tankpatronen bei gleichzeitiger unterbrechungsfreier Versorgung der angeschlossenen Systeme sicherzustellen.

Die Aufgaben der Erfindung werden gelöst durch eine Vorrichtung gemäß Hauptanspruch, sowie einem Verfahren zum Betreiben eines Systems gemäß Nebenanspruch. Vorteilhafte Ausgestaltungen des Verfahrens sowie des Systems ergeben sich aus den jeweils rückbezogenen Ansprüchen.

### Gegenstand der Erfindung

Da die Erfindung das Zusammenspiel eines Verfahrens mit einer geeigneten Vorrichtung betrifft, werden nachfolgend die Verfahren und das System teilweise parallel beschrieben.

Der Grundgedanke der Erfindung besteht darin, ein System bereitzustellen, welches über einen internen Pufferbehälter (Reservebehälter) für ein Betriebsmittel verfügt, der einerseits ermöglicht, dass während des Vorgangs des Wiederbefüllens der laufende Betrieb des Systems ohne Unterbrechung fortgeführt werden kann, und andererseits jeweils problemlos eine vollständige Entleerung der zur Wiederbefüllung vorgesehenen Tankpatronen erlaubt, bzw. einen Austausch der Tankpatrone ermöglicht. So kann das System vorteilhaft kontinuierlich betrieben werden. Gleichzeitig führt die restlose Überführung des Betriebsmittels aus der Tankpatrone in das System zu einer Kostenersparnis. Die Lösung der Aufgabe ist ferner mit geringem Aufwand verbunden und zudem Platz sparend.

Als Systeme im Sinne dieser Erfindung sind insbesondere Brennstoffzellen, die mit einem fluiden Betriebsmittel betrieben werden, anzusehen. Jedoch ist die Erfindung darauf nicht beschränkt. Ein Fachmann wird auch andere Vorrichtungen, die beispielsweise mit Füll- oder Betriebsstoffen, insbesondere auch mit Schmierstoffen betrieben werden, als von dieser Erfindung mit offenbart erkennen.

Das erfindungsgemäße System weist einen Pufferbehälter auf, der fest mit dem zu versorgenden System verbunden ist. Ferner weist das System wenigstens drei Sensoren sowie daran angeschlossene zugehörige Steuereinheiten auf. Der Pufferbehälter übernimmt die Versorgung des Systems für eine bestimmte Zeit nach der vollständigen Entleerung der Tankpatrone, bzw. während des Wechselns einer Tankpatrone. Durch eine integrierte Füllstandssensorik und die spezielle Steuerung kann der Pufferbehälter vorteilhaft direkt an die Versorgungsleitung des Systems angebunden werden.

Nachfolgend werden die einzelnen Schritte des Betriebs und des Vorgangs des Wechsels der Tankpatrone für ein Betriebsmittel am Beispiel einer Brennstoffzelle als einem typischen System im Sinne der Erfindung dargestellt. Das Prinzip ist aber auf alle weiteren Systeme anwendbar, die mit einem flüssigen Betriebsmittel betrieben und über austauschbare Tankpatronen versorgt werden.

### 1. Normalbetrieb:

Das System wird im laufenden Betrieb mit dem Betriebsmittel aus dem komplett gefüllten Pufferbehälter versorgt. Dazu saugt eine Förderpumpe nach Anforderung des Systems das Betriebsmittel aus dem Pufferbehälter, bzw. der daran angeschlossenen Tankpatrone. Pufferbehälter und Tankpatrone sind über eine gasdichte Zuführungsleitung verbunden, in der ein erster Sensor (LS1) angeordnet ist, der in der Lage ist zu erkennen, ob die Leitung mit Flüssigkeit gefüllt ist oder nicht. Ein dafür geeigneter Sensor kann beispielsweise ein Füllstandssensor sein. Der Pufferbehälter umfasst ein Entlüftungsventil, welches im eingebauten Zustand vorteilhaft über dem maximalen Flüssigkeitsspiegel einer vollen Tankpatrone angeordnet ist.

In einer besonders vorteilhaften Ausgestaltung ist die Tankpatrone derart konstruiert, dass Flüssigkeit nur austreten kann, wenn ein spezieller Adapter die Tankpatrone mit dem zu versorgenden System verbindet. Ein besonderer Verschluss der Tankpatrone bewirkt, dass die Tankpatrone ohne Kontakt mit dem Adapter vollständig verschlossen ist, so dass vorteilhaft beim Auswechseln keine Gefahr besteht, mit dem Betriebsmittel in Kontrakt zu kommen. Durch das Anschließen der Tankpatrone über den speziellen Adapter wird einerseits die Entnahme von Betriebsmittel ermöglicht und gleichzeitig die Entlüftung der Tankpatrone sichergestellt.

### 2. Tankpatrone leer:

Sobald die Tankpatrone vollständig entleert ist oder aber die Tankpatrone von der Zuführungsleitung getrennt wird, füllt sich die Zuführungsleitung zwischen Pufferbehälter und Tankpatrone mit Luft. Der zwischen Tankpatrone und Pufferbehälter angeordnete erste Sensor (LS1) detektiert durch den Wechsel von Flüssigkeit (Betriebsmittel) zu Luft, dass in der Leitung zwischen Tankpatrone und Pufferbehälter kein Betriebsmittel mehr vorhanden ist. Dadurch kann vorteilhaft ein erstes Signal ausgegeben werden. Ein solches Signal kann beispielsweise eine akustische oder optische Meldung oder ein Warnhinweis an den Betreiber des Brennstoffzellensystems sein, um diesen auf das bevorstehende Ende einer Betriebsmittelversorgung hinzuweisen. Die Detektion des Wechsels von Flüssigkeit (Betriebsmittel) zu Luft durch den Sensor LS1 muss aber nicht zwangsläufig eine weitere Handlung oder Steuerung nach sich ziehen.

Ein weiterer Sensor (LS3) im unteren Bereich des Pufferbehälters überwacht dabei ständig, ob ein kritischer Füllstand innerhalb des Pufferbehälters unterschritten wird. Wird beispielsweise auf die optionale Ausgabe eines ersten Signals nicht reagiert, so wird der Pufferbehälter nach und nach durch den weiteren Betrieb des Brennstoffzellensystems entleert. Sollte der Sensor LS3 das Unterschreiten eines kritischen Füllstands innerhalb des Pufferbehälters erkennen, kann beispielsweise eine Störungsmeldung oder ein weiteres, zweites Signal ausgegeben und optional eine Steuerung aktiviert werden, die das Brennstoffzellensystem automatisch in einen sicheren Betriebszustand überführen kann. Insbesondere kann dadurch die Förderpumpe gestoppt werden. Auf diese Weise wird durch das erfindungsgemäße Verfahren sichergestellt, dass eine Schädigung des Systems durch die Unterversorgung verhindert wird. Bei dem Sensor LS3 kann es sich beispielsweise um einen Füllstandssensor handeln.

### 3. Tankpatrone wechseln:

Wird jedoch auf die Ausgabe des ersten Signals reagiert und eine neue Tankpatrone bereit gestellt und über die Zuführungsleitung an den Pufferbehälter angeschlossen, so wird durch den weiteren Betrieb des Brennstoffzellensystems bzw. der Förderpumpe nunmehr wieder Betriebsmittel in die Zuführungsleitung gesaugt. Der Sensor LS1 detektiert nun durch den Wechsel von Luft zu Flüssigkeit (Betriebsmittel), dass in der Leitung zwischen Tankpatrone und Pufferbehälter wieder Betriebsmittel vorhanden ist.

Da bei jedem Tankpatronenwechsel auf diese Weise etwas Luft in den Pufferbehälter gelangt und sich dieses Luftvolumen mit jedem Wechsel vergrößern würde, ist bei der Erfindung vorgesehen, dass die Detektion des Wechsels von Luft zu Flüssigkeit (Betriebsmittel) durch den Sensor LS1 dazu führt, dass ein weiteres Signal an ein Entlüftungsventil ausgegeben wird, welches mit dem Pufferbehälter verbunden ist. Dieses Entlüftungsventil befindet sich vorteilhaft über dem maximalen Flüssigkeitsspiegel einer vollen Tankpatrone.

Die Tankpatrone und die Zuführungsleitung sind derart zueinander angeordnet, dass während der Öffnung des Entlüftungsventils des Pufferbehälters durch den hydrostatischen Druck der Flüssigkeit in der Tankpatrone eine zusätzliche Befüllung des Pufferbehälters über den vom System benötigten Volumenstrom an Betriebsmittel hinaus erfolgen kann. Dies soll bewirken, dass nach jedem Wechsel ein Befüllen des Pufferbehälters realisiert werden kann. Dazu ist in der Regel der Querschnitt der Zuführungsleitung zwischen Tankpatrone und Pufferbehälter derart groß gewählt, dass beim Öffnen des Entlüftungsventils des Pufferbehälters der hydrostatische Druck der Flüssigkeit in der Tankpatrone ausreicht, um das in dem Pufferbehälter vorhandene Luftvolumen durch das Entlüftungsventil zu verdrängen. Vorteilhaft erfolgt die zusätzliche Befüllung des Pufferbehälters automatisch durch das Prinzip der kommunizierenden Röhren auf Grund des hydrostatischen Drucks der Flüssigkeit in der Tankpatrone.

Die Entlüftung des Pufferbehälters kann beispielsweise durch ein Magnetventil oder ein automatisches Entlüftungsventil realisiert werden. In einer vorteilhaften Ausgestaltung des Verfahrens kann die Befüllung des Pufferbehälters nach einem Tankpatronenwechsel anstatt über einen hydrostatischen Vorgang auch durch weitere Pumpen, einen Pipettierball oder ähnliche Ansaughilfen vorgenommen werden.

Sobald der Pufferbehälter voll bzw. nahezu mit Betriebsmittel gefüllt ist, detektiert ein weiterer Sensor LS2 den Wechsel von Luft zu Flüssigkeit (Betriebsmittel). Dies löst wiederum die Beendigung der Entlüftung des Pufferbehälters aus, in dem beispielsweise das Magnetventil wieder geschlossen wird. Anderenfalls könnte es nachteilig zu einem Austritt von Betriebsmittel kommen.

Der Sensor LS2 kann beispielsweise an einer sehr hoch gelegenen Stelle im Pufferbehälter angeordnet sein, wodurch eine fast vollständige Befüllung detektiert werden könnte. In einer vorteilhaften Ausgestaltung der Erfindung ist der Sensor LS2 in einer an der höchsten Stelle des Pufferbehälters angesetzten Steigleitung angeordnet. In diesem Fall kann der Sensor LS2 die vollständige Befüllung des Pufferbehälters detektieren.

Ferner kann das Auslösen des zusätzlichen Ansaugens und Füllens des Pufferbehälters alternativ auch manuell erfolgen. Das Entlüftungsventil ist bei diesem Vorgang geschlossen. Der Ansaugvorgang wird regelmäßig nur solange fortgeführt, bis der Sensor LS1 wieder Flüssigkeit meldet. Zu beachten ist, dass die Füllstandssensoren LS1 und LS2 jeweils unterhalb des Niveaus des Flüssigkeitspegels einer vollen Tankpatrone angeordnet sind.

Das erfindungsgemäße System weist in einer weiteren vorteilhaften Ausgestaltung eine spezielle Aufnahme für eine Tankpatrone auf. Zusätzlich kann diese Aufnahme mit einem Kontaktschalter versehen werden. Dieser registriert einen Wechsel der Tankpatrone. Der Kontaktschalter kann in einer weiteren Ausgestaltung auch als kombinierter Schalter und Verriegler ausgeführt werden. Dadurch kann die Tankpatronen-Aufnahme gegen unbefugtes Öffnen gesichert und nur bei einem erforderlichen Wechsel freigegeben werden.

In einer speziellen Ausführungsform der Erfindung kann die weitere Befüllung des Pufferbehälters beispielsweise automatisch durch einen Kontaktschalter ausgelöst werden, der registriert, dass die Tankpatronen-Aufnahme wieder mit einer Patrone gefüllt ist.

Ein oberhalb des Pufferbehälters und der Tankpatrone angeordnetes Ventil, welches über eine weitere Leitung mit einem darin angeordneten zweiten Füllstandssensor (LS2) mit dem Pufferbehälter verbunden ist, sorgt für die notwendige Belüftung.

Die Befüllung des Pufferbehälters, die Entleerung der Tankpatronen und die Zustandsmeldungen an den Anwender erfolgen in einer vorteilhaften Ausgestaltung der Erfindung über eine Steuerung, die mit Level-Sensoren und Anzeigeelementen arbeitet.

Aus dem Pufferbehälter kann vorteilhaft während des gesamten Vorgangs der Wiederbefiillung Flüssigkeit in das System geleitet werden, so dass im Normalfall keine Unterbrechung des Systembetriebs notwendig ist.

Anstelle der Füllstandssensoren LS1 bis LS3 sind auch andere Messtechniken denkbar, die die erforderlichen Zustände für die Steuerung des Systems erkennen können.

Das von den Sensoren LS1 bis LS3 und gegebenenfalls von einem Kontaktschalter ausgegebene Signal kann insbesondere jeweils ein akustisches, optisches oder anderes Warnsignal sein, das beispielsweise direkt durch die Sensoren ausgegeben wird. Ein solches Signal soll den Betreiber des Systems darauf hinweisen, dass entsprechende Maßnahmen vorgenommen werden müssen, um die weitere Versorgung mit dem Betriebsmittel sicherzustellen oder gegebenenfalls das System in einen sicheren Betriebszustand zu überführen.

Das von den Sensoren ausgegebene Signal kann aber auch ein elektrisches oder elektromagnetisches Signal sein, welches direkt an das System weitergeleitet wird, um so beispielsweise automatisch Vorsorgemaßnahmen für die Überführung in einen sicheren Betriebszustand zu treffen oder die Entlüftung des Pufferbehälters zu regeln. Dazu kann das ausgegebene Signal vorteilhaft direkt an eine Steuereinheit ausgegeben werden, die daraufhin die Durchführung der erforderlichen Maßnahmen einleitet.

Anstelle der Entlüftung über ein Magnetventil sind ebenfalls weitere Varianten denkbar, die nach einem Patronenwechsel die erforderliche Entlüftung des Pufferbehälters gewährleisten können.

In einer bevorzugten Ausführung der Erfindung erfolgt die Versorgung des Systems mit einem Betriebsmittel aus dem Pufferbehälter durch Erzeugung eines Unterdrucks im System. In diesem Fall kann vorteilhaft auf eine separate Förderpumpe verzichtet werden. Die Regelung des Durchflusses kann in einem solchen Fall dann beispielsweise durch ein Regelventil erfolgen, welches durch eine Steuereinheit angesteuert wird.

Das erfindungsgemäße Verfahren hat gegenüber dem bekannten Stand der Technik den Vorteil, dass ein Pufferbehälter vorhanden ist, so dass eine Betriebsreserve für das System vorhanden ist, und so das System wegen Betriebsmittelmangel nicht gleich abgeschaltet werden muss, sobald die Tankpatrone vollständig entleert ist.

Zudem ist die austauschbare Tankpatrone jederzeit nach Reservemeldung vollständig restentleert und kann dann ohne Zeitverlust und bei weiter laufendem System sofort ausgetauscht werden. Gleichzeitig stellt das erfindungsgemäße Verfahren eine Betriebsreserve zur Verfügung, in der vollständig restentleerte Tankpatronen ohne Betriebsunterbrechung ausgetauscht werden können.

Durch die spezielle Entlüftungseinrichtung verhindert die Erfindung jederzeit den Eintritt von Luft in das angeschlossene System. Der Pufferbehälter wird automatisch nach außen entlüftet. Selbst bei vollständig restentleerter Tankpatrone wird für ein definiertes Zeitfenster die unterbrechungsfreie Versorgung des angeschlossenen Systems ermöglicht. Dabei ist jederzeit ein variabler Volumenstrom an Brennstoff für die angeschlossenen Pumpen verfügbar. Da der Pufferbehälter fester Bestandteil des Systems ist, kann die erforderliche Sensorik direkt an diesem angebracht werden. Die austauschbare Tankpatrone kann damit sehr einfach und kostengünstig realisiert werden.

### Spezieller Beschreibungsteil

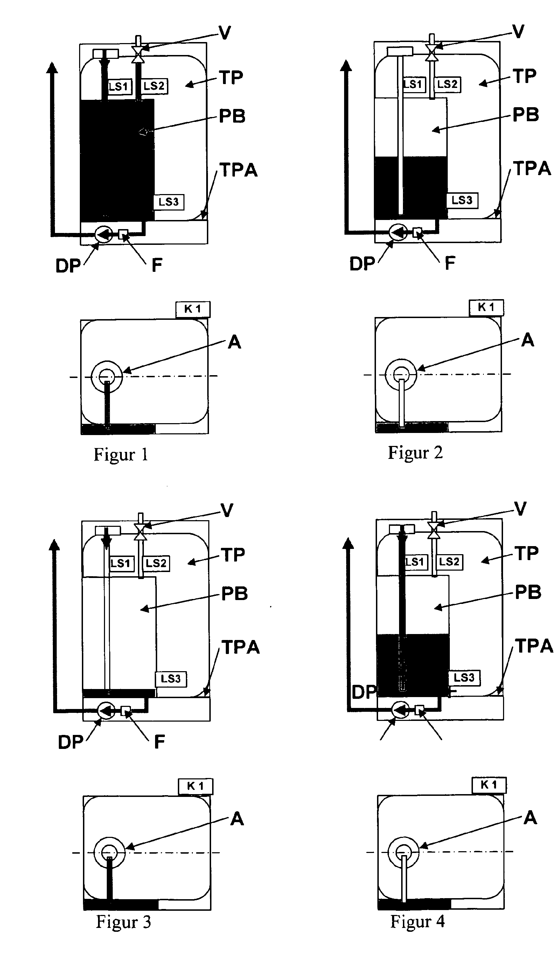

Als ein vorteilhaftes Ausführungsbeispiel der Erfindung wird im Folgenden die Versorgung einer Direktmethanolbrennstoffzelle (DMFC) über eine Methanoltankpatrone als ein erfindungsgemäßes, mit einem Betriebsmittel betriebenes System, dargestellt. Die Funktion wird anhand der Figuren 1 bis 4 verdeutlicht. Dieses Ausführungsbeispiel verdeutlicht nur das prinzipielle Verfahren und die Vorrichtung, und ist in keinem Fall einschränkend zu werten.

Das Ausführungsbeispiel wird anhand von Figuren dargestellt, wobei der Füllstand der Tankpatrone dabei nicht dargestellt ist, sondern nur der Füllstand im internen Pufferbehälter. In den Figuren bedeuten:

| | | | |
|---|---|---|---|
| LS1 | = Sensor 1 | LS2 | = Sensor 2 |
| LS3 | = Sensor 3 | K1 | = Kontaktschalter (optional) |
| V | = Ventil zum Entlüften | TP | = Tankpatrone |
| PB | = Pufferbehälter | DP | = Dosierpumpe |
| F | = Filter (optional) | A | = Adapter |
| TPA | = Tankpatronenaufnahme | | |

Die Tankpatrone ist ein Kanister mit oben liegendem Verschluss. Über den Verschluss erfolgt die Verbindung zum internen Pufferbehälter. In dieser Ausgestaltung wird die Tankpatrone auf gleicher Höhe wie der interne Pufferbehälter angeordnet. Die Tankpatrone selbst weist vorteilhaft einen besonders ausgestalteten Verschlussdeckel auf. Dieser verhindert im geschlossenen Zustand, dass Betriebsmittel austreten kann. Auf den Verschlussdeckel kann bei dieser Ausführungsform ein besonderer Adapter aufgeschraubt werden, der einerseits eine Verbindung zum Brennstoffzellensystem ermöglicht und gleichzeitig eine Belüftung der Tankpatrone erlaubt. Innerhalb der Tankpatrone ist der Adapter vorteilhaft mit einer bis auf den Boden reichenden Leitung verbunden, so dass beim Ansaugen Betriebsmittel vom tiefsten Punkt der Tankpatrone entnommen wird, und eine vollständige Entleerung ermöglicht wird.

Es ist prinzipiell jedoch auch denkbar, dass die Tankpatrone komplett oberhalb des Pufferbehälters angeordnet ist, so dass auch ein unten angeordneter Auslass der Tankpatrone mit dem internen Pufferbehälter verbunden ist. In diesem Fall wird jedoch zusätzlich eine Belüftungsöffnung im oberen Bereich der Tankpatrone benötigt.

Vorteilhaft weist das Brennstoffzellensystem einen Kontaktschalter auf, der einen Wechsel der Tankpatrone zu detektieren vermag. Zum Tankpatronenwechsel wird der Adapter abgeschraubt und die Tankpatrone aus ihrer Aufnahme entfernt. Der Kontaktschalter K1 registriert diesen Vorgang. Eine volle Patrone wird eingesetzt und der Adapter wieder aufgeschraubt. Der Kontaktschalter K1 registriert, dass die Tankpatronen-Aufnahme wieder gefüllt ist. Diese Abfolge löst den Ansaugvorgang und eine hydrostatische Füllung des Pufferbehälters aus.
Alternativ kann aber auch ein in der Zuführungsleitung integrierter Sensor LS1 den Wechsel von Luft zu Flüssigkeit registrieren und damit den Ansaugvorgang und eine hydrostatische Füllung des Pufferbehälters auslösen. Ferner ist es auch denkbar, dass nach dem Wechsel der Ansaugvorgang für die Füllung des internen Pufferbehälters manuell ausgelöst wird.
1. Normalbetrieb (siehe Figur 1):
   Im Normalbetrieb saugt die Förderpumpe nach Anforderung des Systems aus dem Pufferbehälter bzw. der Tankpatrone. Dieser Vorgang wird nur unterbrochen, wenn LS3 keine Flüssigkeit mehr detektiert und somit der minimale Füllstand unterschritten ist. Das Ventil des Pufferbehälters ist geschlossen.
2. Tankpatrone leer (siehe Figur 2):
   - Sensor LS 1 erkennt, dass keine Flüssigkeit mehr vorhanden ist.
   - Meldung an den Nutzer: "Tankpatrone erneuern spätestens in x Minuten" (abhängig von Systemverbrauch und Volumen Pufferbehälter).
   - Nach weiteren y Minuten fängt Anzeige an langsam zu blinken (= Meldung an den Nutzer: "Tankpatrone erneuern spätestens in z Minuten" mit z < x).
   - Wenn Sensor LS3 keine Flüssigkeit meldet erfolgt eine Störungsmeldung: "Tankpatrone leer / sofort wechseln". Das Brennstoffzellensystem bekommt gleichzeitig ein Signal und wird zur Verhinderung etwaiger Schäden in einen sicheren Zustand gefahren.
   - Das Ventil des Pufferbehälters ist geschlossen.
3. Ansaugen (siehe Figur 3) nach einem Tankpatronenwechsel:
   - Magnetventil ist geschlossen.
   - Pumpe saugt, bis der Sensor LS 1 wieder Flüssigkeit meldet.
   - Anmerkung: LS 1 und LS2 sind unterhalb des Flüssigkeitspegels einer vollen Tankpatrone angebracht.
   - Das Ventil des Pufferbehälters ist geschlossen.
4. Füllen, Entlüften (siehe Figur 4):
   - Das Ventil des Pufferbehälters öffnet und lässt Luft entweichen während sich der Pufferbehälter hydrostatisch füllt. Dieser Vorgang wird solange fortgeführt, bis der Sensor LS2 wieder Flüssigkeit detektiert.
   - Das Magnetventil schließt, wenn der Sensor LS2 Flüssigkeit detektiert.

Optional kann das erfindungsgemäße Verfahren auch noch mit der Ausgabe weiterer Meldungen oder Informationen verbunden sein, die über die Sensoren LS1 bis LS3 initiiert werden können. Ist der Füllvorgang in der erwarteten Zeit nach dem Patronenwechsel noch nicht abgeschlossen, so erfolgt beispielsweise eine Fehlermeldung an den Bediener. Dabei sind die folgenden Fehler möglich:
- Adapter nicht richtig aufgeschraubt
- Bereits angebrochene oder manipulierte Patrone eingesetzt
- Dosierpumpe defekt
- Verbindung zum System verstopft
- Füllstandssensoren defekt
- Leckage

## Patentansprüche

1. Verfahren zum Versorgen eines Systems mit einem flüssigen Betriebsmittel mit Hilfe einer austauschbaren Tankpatrone, **dadurch gekennzeichnet,**
- **dass** die austauschbare Tankpatrone über eine Zuführungsleitung an einen im System angeordneten Pufferbehälter angeschlossen wird,
- **dass** das System während des Betriebs das Betriebsmittel aus dem Pufferbehälter und die daran angeschlossene Tankpatrone entnimmt,
- **dass** nach einer vollständigen Entleerung der angeschlossenen Tankpatrone über den Pufferbehälter eine Betriebsmittelreserve zur Verfügung steht,
- **dass** nach einem Wechsel der Tankpatrone der Pufferbehälter gefüllt wird und eine geeignete Entlüftung am Pufferbehälter verhindert, dass Luft in das angeschlossene System eindringt.

2. Verfahren nach Anspruch 1, bei dem der Wechsel der Tankpatrone durch einen zwischen der Tankpatrone und dem Pufferbehälter angeordneten Sensor LS 1 detektiert wird.

3. Verfahren nach vorhergehendem Anspruch, bei dem der Sensor LS 1 den Wechsel der Tankpatrone durch einen Wechsel von Luft zu Flüssigkeit in der Zuführungsleitung oder durch einen Kontaktschalter detektiert wird.

4. Verfahren nach Anspruch 1 bis 3, bei dem die Füllung des Pufferbehälters automatisch durch den hydrostatischen Druck des Betriebsmittels in der Tankpatrone oder durch einen manuell ausgelösten Füllschritt erfolgt.

5. Verfahren nach Anspruch 4, bei dem der manuell ausgelöste Füllschritt durch eine Pumpe oder einen Pipettierball erfolgt.

6. Verfahren nach Anspruch 1 bis 6, bei dem die Füllung des internen Pufferbehälters durch einen weiteren Sensor LS2 gestoppt wird.

7. Verfahren nach einem der Ansprüche 1 bis 6, bei dem der Sensor LS 1 einen Wechsel von Flüssigkeit zu Luft in der Zuführungsleitung detektiert und daraufhin ein Signal ausgibt.

8. Verfahren nach einem der Ansprüche 1 bis 7, bei dem ein weiterer Sensor LS3 in dem Pufferbehälter einen Wechsel von Flüssigkeit zu Luft detektiert und daraufhin ein Signal ausgibt oder den Füllstand in dem internen Pufferbehälter detektiert und bei Unterschreitung ein Signal ausgibt.

9. Betriebsmittel verbrauchendes System
- mit einem im System angeordneten Pufferbehälter für ein Betriebsmittel, über den die Systeme mit diesem Betriebsmittel versorgt werden können, wobei dieser Pufferbehälter eine geeignete Entlüftungseinrichtung aufweist,
- mit einer Vorrichtung zur Aufnahme einer Tankpatrone für ein flüssiges Betriebsmittel,
- mit einer zwischen der Tankpatrone und dem Pufferbehälter vorgesehenen Zuführungsleitung.

10. System nach Anspruch 10, mit einem Kontaktschalter, der einen Wechsel der Tankpatrone zu detektieren vermag oder mit einem in der Zuführungsleitung angeordneten Sensor, der einen Wechsel von Flüssigkeit zu Luft innerhalb der Zuführungsleitung zu detektieren vermag.

11. System nach einem der Ansprüche 9 bis 10, bei dem der Schalter bzw. der Sensor zum Schalten des Entlüftungsventils mit diesem verbunden ist.

12. System nach einem der Ansprüche 9 bis 11, mit einem weiteren Sensor im unteren Bereich des Pufferbehälters, der einen Wechsel von Flüssigkeit zu Luft oder Unterschreiten eines Füllstandes zu detektieren vermag.

13. System nach einem der Ansprüche 9 bis 12, bei dem die Aufnahme der Tankpatrone oberhalb des internen Pufferbehälters angeordnet ist.

14. System nach einem der Ansprüche 9 bis 13, mit einem Adapter zum Anschluss der Tankpatrone an die Zuführungsleitung, wobei der Adapter zum Anschluss an eine verschlossene Tankpatrone vorgesehen ist.

15. Brennstoffzelle als System nach einem der Ansprüche 9 bis 14.

16. Tankpatrone für ein flüssiges Betriebsmittel für den Einsatz in einem System nach einem der Ansprüche 9 bis 14, mit Mitteln, die beim Anschluss eines Adapters an die verschlossene Tankpatrone eine Entnahme von Betriebsmitteln ermöglichen.
